# EUROPÄISCHE PATENTSCHRIFT

(11) **EP 0 733 190 B1**
(45) Veröffentlichungstag und Bekanntmachung des Hinweises auf die Patenterteilung: **19.05.1999**
(21) Anmeldenummer: 94928836.9
(22) Anmeldetag: 06.10.1994
(51) Int. Cl.: F25B 17/08, F25B 35/04

(54) **KÜHLVORRICHTUNG MIT EINER INTERMITTIEREND ARBEITENDEN KÜHLEINHEIT**
COOLING DEVICE WITH INTERMITTENTLY OPERATING COOLING UNIT
DISPOSITIF DE REFROIDISSEMENT COMPORTANT UNE UNITE FRIGORIFIQUE A FONCTIONNEMENT INTERMITTENT

(43) Veröffentlichungstag der Anmeldung: 25.09.1996
(73) Patentinhaber: ELECTROLUX LEISURE APPLIANCES AB, 105 45 Stockholm (SE)
(72) Erfinder: EBBESON, Bengt, CH-8356 Ettenhausen (CH)
(74) Vertreter: Grosse, Wolfgang, Dipl.-Ing.
(86) Internationale Anmeldenummer: EP9403237
(87) Internationale Veröffentlichungsnummer: WO9611368

(56) Entgegenhaltungen:
- WO-A-93/03314
- DE-C- 630 063
- DE-C- 679 432
- US-A- 1 913 869
- US-A- 1 943 968
- US-A- 2 017 471
- US-A- 2 049 782
- US-A- 2 269 099
- US-A- 2 340 887
- US-A- 2 386 438
- US-A- 2 528 004
- US-A- 2 649 700

## Beschreibung

Die Erfindung betrifft eine Kühlvorrichtung nach dem Oberbegriff des Anspruchs 1.

Kühlaggregate der vorgenannten Art werden insbesondere in Kleinkühlgeräten und Luftkühlern von Klimatisierungseinrichtungen verwendet. Im Sorberteil wird das mit einer Arbeitsflüssigkeit angereicherte sorptionsfähige Material erhitzt und gibt dabei die sorbierte Flüssigkeit in Dampfform ab. Der Dampf kondensiert in dem Kondensator, und die kondensierte Flüssigkeit sammelt sich in dem Verdampfer, welcher in der Gehäuseeinheit der Kühlvorrichtung angeordnet ist. Wenn die Wärmequelle für das sorptionsfähige Material abgestellt wird und das Material abkühlt, saugt das Material die Feuchtigkeit aus der mit Dampf gesättigten Leitung auf und erzeugt dabei in der Leitung einen niedrigen Druck, der die in dem Verdampfer befindliche Flüssigkeit verdampfen läßt und ggfs. bei niedriger Temperatur zum Kochen bringt. Der Verdampfer entzieht dabei der Umgebung in der Gehäuseeinheit Wärme und kann deswegen als Kühlteil verwendet werden. Derartige Kühlgeräte sind einfach aufgebaut und weisen keine bewegten Teile auf. Als sorptionsfähiges Material kann beispielsweise ein Zeolith verwendet werden, das in der vorstehend beschriebenen Weise mit Wasser reagiert. Das Wasser kommt dabei wegen des niedrigen Drucks bei wenigen Graden und gegebenenfalls auch bei Minustemperaturen in dem Verdampfer zum Kochen. Für Kühlvorrichtungen dieser Art sind jedoch auch andere Sorptionsmaterialien und Flüssigkeiten geeignet, wie zum Beispiel Salz und Ammoniak.

Beim Austreiben der Feuchtigkeit aus dem sorptionsfähigen Material ist es wichtig, daß das Material möglichst gleichmäßig erwärmt wird. Dies bereitet insbesondere dann gewisse Schwierigkeiten, wenn die Erwärmung durch eine Wärmequelle erfolgt, wie es bei Kühlaggregaten der Fall ist, die unabhängig von der Erwärmungsart (elektrischer Strom, Gas, Trockenbrennstoff und dergleichen) sein sollen. Da die Temperatur einer Flamme im Vergleich zur erzeugten Wärmemenge sehr hoch ist, kommt es bei einem Sorberteil der in Rede stehenden Art darauf an, die Wärme so auf das sorptionsfähige Material zu übertragen, daß eine örtliche Überhitzung vermieden wird. Eine weitere Forderung besteht darin, daß in der Sorptionsphase eine Überhitzung des Sorberteils möglichst vermieden wird, da dann die Sorptionstätigkeit des Sorberteils langsam zum Erliegen kommt und damit die Kühlung in der Gehäuseeinheit der Kühlvorrichtung verringert wird.

Aus der US-A-2 049 782 ist eine gattungsgemäße Kühlvorrichtung bekannt, bei der ein zentraler Reaktor sowohl Absorber als auch Generator ist. In dem Reaktor ist ein mit Kühlmittel befüllter Container enthalten, der mit einem in einer Kühleinheit angeordneten Verdampfer in Verbindung steht. Zur Kühlung wird der in dem Verdampfer erzeugte Dampf sorbiert, wobei der Container mit Flüssigkeit umgeben ist. Zum Austreiben des Dampfes wird die um den Container befindliche Flüssigkeit erhitzt, wobei mittels eines Ventils der Flüssigkeitspegel der erhitzten Flüssigkeit abgesenkt wird.

Der Erfindung liegt deshalb die Aufgabe zugrunde, bei einer Kühlvorrichtung der gattungsgemäßen Art den das Sorberteil aufnehmenden Reaktor derart anzuordnen und auszugestalten, daß die Effektivität der Sorptions- und Regenerationsphase der Kühleinheit verbessert wird und eine sichere Funktionsweise des intermettierenden Betriebes trotz eines einfachen Aufbaues und dem Einsatz unterschiedlicher Heizquellen gewährleistet ist.

Diese Aufgabe wird durch die im Kennzeichen des Anspruchs 1 angegebenen Merkmale in vorteilhafter Weise gelöst.

Erfindungsgemäß ist der Reaktor im oberen Bereich der Kühlvorrichtung angeordnet und der Vorratsbehälter befindet sich unterhalb des Sorberteils des Reaktors, wobei allerdings hier eine zusätzliche Pumpe in dem zweiten geschlossenen Kreislauf vorgesehen ist. Der Vorteil dieser Konstruktion besteht darin, daß bei abgestellter Pumpe in der Regenerationsphase die Arbeitsflüssigkeit aus dem Arbeitsraum mittels Schwerkraft in den Vorratsbehälter zurückströmen kann. Dagegen tritt die Pumpe in der Sorptionsphase in Aktion, um die Flüssigkeit aus dem Vorratsbehälter in den Arbeitsraum zu pumpen, wo es den Sorberteil umspült und kühlt.

Das erste System besteht im wesentlichen aus dem Verdampfer, der in einer Isolierung im oberen Teil der Gehäuseeinheit der Kühlvorrichtung angeordnet ist und einen Behälter zur Aufnahme der Arbeitsflüssigkeit, sowie ein aus dem Behälter nach unten in den zu kühlenden Raum ragendes Rohr und ein sich daran anschließendes Verdampferrohr aufweist, welches bis über das Niveau der Arbeitsflüssigkeit im Behälter reicht. Ferner besitzt das erste geschlossene System eine Verbindungsleitung zwischen dem Verdampfer und dem Sorberteil, die aus mehreren Abschnitten besteht, nämlich einer im wesentlichen senkrecht verlaufenden Rohrleitung eines relativ kleinen Querschnitts, an welche sich eine schlangenförmige Steigleitung anschließt, die einen größeren Querschnitt aufweist und die wiederum mit einer Falleitung in das Sorberteil eingreift, wobei das Ende dieser Falleitung entsprechende Öffnungen besitzt, durch die die verdampfte Arbeitsflüssigkeit in das sorptionsfähige Material eindringen kann. Als Arbeitsflüssigkeit bietet sich z. B. Ammoniak an, welches in Dampfform in das sorptionsfähige Material wie z. B. Manganchlorid eindringt und durch dessen starke Affinität zu Ammoniak adsorbiert wird. Der Reaktor selbst kann vorteilhaft aus zwei konzentrisch und im Abstand zueinander angeordnete Gehäuseteilen bestehen, wobei der innere Gehäuseteil das mit dem Sorptionsmaterial gefüllte Sorberteil und das äußere Gehäuseteil ein das Sorberteil vollständig umschließender Isoliermantel sind. Der zwischen beiden Gehäuseteilen befindliche Zwischenraum ist mit der Arbeitsflüssigkeit des zweiten geschlossenen Systems gefüllt, wobei das zweite geschlossene System in einem oberen und einem unteren Bereich an den Arbeitsraum des Reaktors angeschlossen ist.

Die Heizeinrichtung des Sorberteils kann im unteren Bereich des Arbeitsraumes des Reaktors angeordnet und von der Arbeitsflüssigkeit, z. B. Wasser, umspült sein. Es ist aber gemäß einer weiteren Ausführungsform auch denkbar, daß die Heizeinrichtung in einer kleineren separaten Kammer angeordnet ist, die mit einem oberen und einem unteren Abschnitt des Arbeitsraums zur Bildung eines Heizkreislaufes verbunden ist. Dabei kann die Heizeinrichtung vorteilhaft eine elektrische Heizpatrone sein, und es kann zusätzlich insbesondere im Bereich der Heizpatrone ein am Arbeitsraum entlang geführtes gasbeheiztes Rohr vorgesehen sein, was in vorteilhafter Weise ermöglicht, daß man entweder elektrische Energie oder aber Gas bzw. Trockenbrennstoff oder dergleichen als Wärmequelle einsetzen kann oder aber zur Erzielung einer besonders hohen Heizleistung beide Heizeinrichtungen gleichzeitig. Auf diese Weise wird die erfindungsgemäße Kühlvorrichtung von der Energieart unabhängig und sie ist dadurch zum Beispiel in Hotels, Campingmobilen oder Booten einzusetzen.

Aus Sicherheitsgründen kann eine gesonderte Verbindungsleitung außerhalb des Arbeitsraumes zwischen der unteren Anschlußleitung des zweiten geschlossenen Systems und der unteren Anschlußleitung des Heizungskreislaufes vorgesehen sein. Diese Verbindungsleitung kann als Sicherheitseinrichtung dazu dienen, die verhältnismäßig kleine Heizungskammer der Heizpatrone mit rücklaufender Arbeitsflüssigkeit aus dem zweiten geschlossenen System zu versorgen, um zu verhindern, daß die Heizpatrone wenigstens zum Teil nicht mit Arbeitsflüssigkeit umspült ist und dadurch eine Überhitzung des Sorberteils in der Regenarationsphase stattfinden könnte.

In vorteilhafter Weise weist das zweite geschlossene System ein im oberen Bereich des Arbeitsraumes des Reaktors angeschlossenes, wärmeisoliertes Steigrohr auf, sowie ein schlangenförmiges Kühlrohr, den Vorratsbehälter und ein mit dem unteren Bereich des Arbeitsraumes des Reaktors verbundenes Fallrohr. In dem Steigrohr ist oberhalb des Sorberteils ein Absperrventil vorgesehen, welches in der Sorptionsphase geöffnet und in der Regenerationsphase geschlossen ist.

Die Umschaltung der Kühleinheit vom Sorptionsbetrieb zum Regenerationsbetrieb bzw. umgekehrt erfolgt in vorteilhafter Weise in Abhängigkeit von einer vorgegebenen Meßgröße. Diese Meßgröße kann zum Beispiel die Temperatur des Kühlwassers im zweiten geschlossenen System sein oder sie kann einer vorgegebenen Wärmeleistung des Reaktorteils während der Sorptionsphase entsprechen oder es ist schließlich auch denkbar, daß man den Zeitpunkt erfaßt, in welchem eine bestimmte Ammoniakmenge im Verdampfer, möglicherweise die gesamte Menge, verdampft ist, so daß der Behälter leer ist und damit die Sorptionstätigkeit des Sorberteils beendet ist. Es-ist schließlich auch denkbar, daß die Meßgröße durch Einstellung eines Thermostaten im Kühlraum der Kühlvorrichtung vorgegeben wird. Wird diese Temperatur erreicht, kann eine elektrische Umstellung des Ventils bzw. ein An- oder Abschalten der Heizeinrichtung erfolgen.

Weitere Merkmale, Einzelheiten und Vorteile der Erfindung ergeben sich aus der nachfolgenden Beschreibung von bevorzugten Ausführunsbeispielen anhand der Zeichnung. Darin zeigen:
- Fig.1: eine schematische Gesamtansicht einer Kühlvorrichtung;
- Fig.2: eine schematische Schnittansicht entlang der Linie II-II in Fig.1;
- Fig.3: eine vergrößerte Teilansicht des Reaktorteils der erfindungsgemäßen Kühlvorrichtung gemäß einem ersten Ausführungsbeispiel, und
- Fig. 4: eine vergrößerte Teilansicht des Reaktorteils der erfindungsgemäßen Kühlvorrichtung gemäß einem zweiten Ausführungsbeispiel.

Die erfindungsgemäße Kühlvorrichtung umfaßt im wesentlichen eine Gehäuseeinheit 1 und eine intermittierend arbeitende Kühleinheit 2, und die Kühleinheit 2 besteht im wesentlichen aus einem in einem isolierten Teil der Gehäuseeinheit angeordneten Verdampfer 3, einem Kondensator 4 und einem Reaktor 5 mit einem beheizbaren Sorberteil 6.

Der Verdampfer 3 besitzt einen Behälter 7, der zum Teil mit der Arbeitsflüssigkeit Ammoniak 8 gefüllt ist. Von dem Boden des Behälters erstreckt sich ein Kühlrohr 9 nach unten in den zu kühlenden Raum 10 der Gehäuseeinheit 1 und ist mit einem Kühlblech 11 verbunden. An das Kühlrohr 9 schließt sich ein Verdampferrohr 12 an, welches in den Behälter 7 nach oben bis über das Flüssigkeitsniveau reicht.

Der Verdampfer 3 ist mit einer sich im wesentlich senkrecht erstreckenden Rohrleitung 13 verbunden, an welche sich die schlangenförmige Rohrleitung 14 und ein senkrechtes Rohr 15 anschließen. Der Querschnitt der schlangenförmigen Rohrleitung 14 und des senkrechten Rohres 15 ist größer als derjenige der Rohrleitung 13. Das Ende des Rohres 15 ragt in den Sorberteil 6 des Reaktors 5 hinein und besitzt Öffnungen, durch welche das verdampfte Ammoniak in das Sorptionsmaterial eintreten kann.

Der Reaktor 5 besteht im wesentlichen aus zwei konzentrisch und im Abstand zueinander angeordneten Gehäuseteilen 6 bzw. 16, wobei das Gehäuseteil 6 dem Sorberteil entspricht, während das Gehäuseteil 16 ein Isoliermantel ist, der das Sorberteil stirnseitig formschlüssig und mantelseitig in einem Abstand zur Sorberteilaußenfläche umschließt. Auf diese Weise wird zwischen dem Sorberteil 6 und dem Isoliermantel ein Arbeitsraum 17 geschaffen, welcher ganz oder teilweise mit der Arbeitsflüssigkeit 18 (insbesondere Wasser) gefüllt ist. Im oberen und unteren Bereich des Arbeitsraumes 17 ist ein zweites geschlossenes System 19 an den Reaktor 5 angeschlossen. Dieses zweite geschlossene System umfaßt im wesentlichen ein wärmeisoliertes Steigrohr 20, ein schlangenförmiges Kühlrohr 21, einen Vorratsbehälter 22 und ein mit dem unteren Bereich des Arbeitsraumes 17 verbundenes Fallrohr 23. In dem Steigrohr 20 ist ein Absperrventil 24 angeordnet, auf dessen Funktion später noch eingegangen wird.

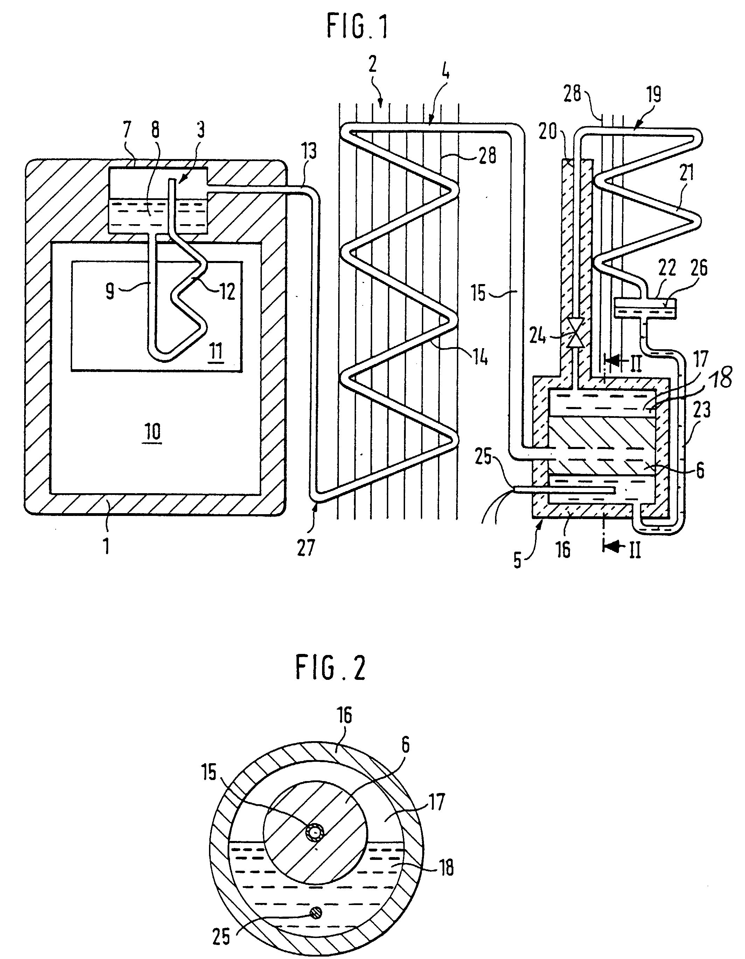

Unterhalb des Sorberteils 6 ist innerhalb des Arbeitsraumes 17 eine Heizeinrichtung 25 vorgesehen, wobei es sich bei diesem Ausführungsbeispiel um eine elektrische Heizpatrone handelt. Wie zu erkennen ist, ist die elektrische Heizpatrone 25 vollständig von der Arbeitsflüssigkeit 18 umspült. Bei geöffnetem Ventil 24 ist das Flüssigkeitsniveau 26 erreicht, so daß das Sorberteil 6 und die Heizeinrichtung 25 vollständig mit Flüssigkeit umgeben sind. Diese Betriebsstellung kennzeichnet die Sorptionsphase, worauf später noch eingegangen wird. In der Regenerationsphase, in welcher die Heizpatrone 25 in Betrieb ist, kann sich ein Betriebszustand gemäß Fig. 2 einstellen, in welchem aufsteigender Dampf im oberen Teil des Arbeitsraums bei geschlossenem Ventil 24 einen solchen Druckzustand erzeugt, daß die Arbeitsflüssigkeit 18 durch das Fallrohr 23 zum Vorratsbehälter 22 gedrückt wird.

Wie weiterhin aus der Fig. 1 zu entnehmen ist, ist bei dieser nicht beansprutchen Ausführungsform der Reaktor 5 liegend im unteren Teil der Kühlvorrichtung angeordnet. Das erste geschlossene System 27, welches sich aus dem Verdampfer 3, den Rohrleitungen 13, 14, 15 und dem Sorberteil 6 zusammensetzt, ist mit dem zweiten geschlossenen System 19 parallelgeschaltet. Beide Systeme sind evakuierte geschlossene Systeme und befinden sich nebeneinander auf der Rückseite und Außenseite der Gehäuseeinheit, wobei die Wärme nach außen durch Radiatoren 28 in der üblichen Weise an die Umgebungsluft abgegeben wird.

Bei den nachfolgenden Figuren handelt es sich um Ausführungsbeispiele, wobei die sich entsprechenden Teile mit den gleichen Bezugszeichen bezeichnet sind. Es ist auch nicht die gesamte Kühlvorrichtung dargestellt, sondern lediglich der Reaktorteil mit dem zweiten geschlossenen System 19.

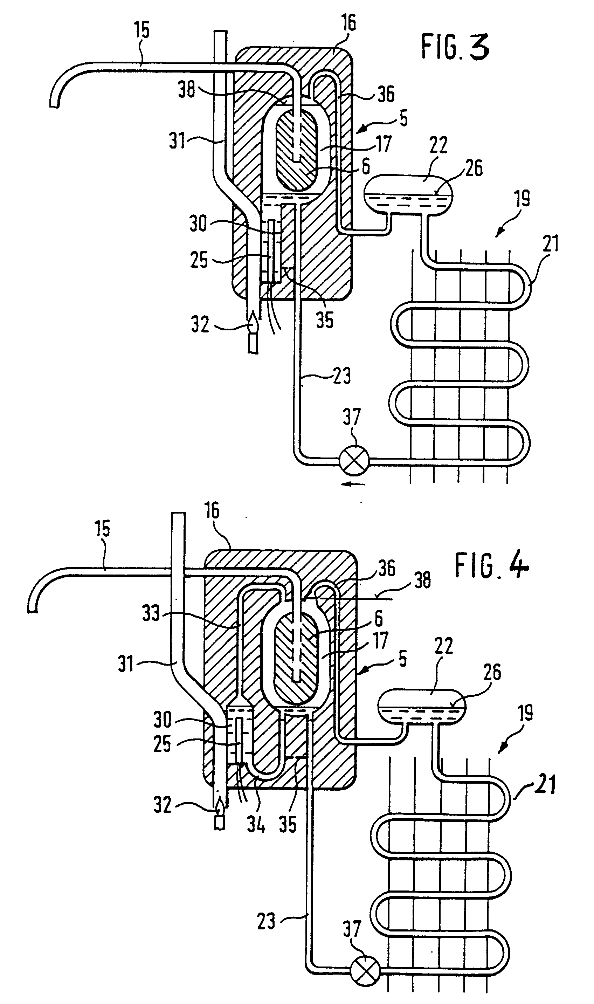

Der Reaktor 5 bei den Ausführungsbeispielen gemäß den Fig. 3 und 4 ist im oberen Teil der Kühlvorrichtung angeordnet, während sich der Vorratsbehälter 22 unterhalb des Sorberteils 6 befindet.

Es ist zu bemerken, daß sich in der Anschlußleitung 36, mit welcher das zweite geschlossene System 9 an den oberen Bereich des Arbeitsraumes 17 angeschlossen ist, kein Absperrventil befindet. Aus diesem Grunde besitzt die Anschlußleitung 36 auch einen relativ kleinen Querschnitt im Gegensatz zu dem schlangenförmigen Kühlrohr 21. Da das Niveau der Flüssigkeit 26 aufgrund der besonderen Anordnung des Vorratsbehälters 22 unterhalb des Sorberteils 6 befindet, muß die Flüssigkeit mit Hilfe einer Pumpe 37 in den Arbeitsraum 17 gepumpt werden, damit das Flüssigkeitsniveau 38 erzielt wird. In diesem Zustand der Sorptionsphase kann das Sorberteil 6 wirksam gekühlt werden. In der Regenerationsphase wird dagegen die Pumpe 37 abgestellt, und die Flüssigkeit strömt aus dem Arbeitsbereich über die Leitungen 23, 21 in den Vorratsbehälter 22 zurück. Auch in diesem Falle ist zwischen den Leitungen 23 und der separaten Kammer 30 eine Verbindungsleitung 35 vorgesehen, so daß gewährleistet ist, daß sich immer genügend Wasser zur Erzeugung von Dampf in der Kammer 30 befindet, wobei der Dampf nach oben strömt und auf der Oberfläche des Sorberteils 6 kondensiert, um dann wieder nach unten abzutropfen. Auf diese Weise wird ein hervorragender Wärmeübergang von den Heizpatrone auf das Sorberteil 6 erzielt und der Wirkungsgrad der Vorrichtung erheblich erhöht.

Es kann natürlich vorkommen, daß ein geringer Dampfanteil auch durch die Leitung 36 in den Vorratsbehälter gelangt, was aber wegen des relativ kleinen Querschnitte der Anschlußleitung 36 und wegen deren Verlegung innerhalb des Isoliermantels des Reaktors 5 nicht zu beachtenswerten Wärmeverlusten führt.

Die Funktionsweise der erfindungsgemäßen Vorrichtung ist folgendermaßen: Während der Sorptionsphase (Kühlphase) ist bei den Vorrichtungen nach den Fig. 3 und 4 die Pumpe 37 angeschaltet. Durch die starke Affinität des Manganchlorids im Sorberteil 6 verdampft das Ammoniak 8 im Verdampfer 3 und strömt mit einem relativ niedrigen Druck durch die Rohrleitungen 14, 15 in das Sorberteil 6, wo es im Manganchlorid sorbiert wird. Da der Ammoniakdampf eine sehr niedrige Temperatur von ca. -35° besitzt, bewirkt die leichte Erwärmung während des Durchströmens mit niedrigem Druck durch die Leitungen 14 und 15 keine Kondensation. Bei der Sorption des Ammoniakdampfes in dem Sorberteil 6 wird Wärme erzeugt, während im Kühlraum 10 durch die Aufnahme von Wärme bei der Verdampfung des Ammoniaks Kälte erzeugt wird. Da das Sorberteil ohne geeignete Kühlung auf erhebliche Temperaturen ansteigen kann und dadurch die Sorptionsleistung relativ schnell abnimmt, dient das sich im zweiten geschlossenen System 19 befindliche Arbeitsflüssigkeit 18 zur Kühlung des Sorberteils 6. Die Arbeitsflüssigkeit 18, welche sich auf dem Flüssigkeitsniveau zwischen 26 und 38 befindet, umspült dazu das gesamte Sorberteil entlang seiner Mantelfläche. Durch die Abgabe der Wärme von dem Sorberteil an die Arbeitsflüssigkeit entstehender Dampf gelangt über das Anschlußrohr 36 in das Kühlrohr 21, in dem er kondensiert, so daß das Kühlrohr und der Vorratsbehälter 22 sich wieder mit Flüssigkeit füllen.

Ist nach gewisser Zeit der Sorptionsvorgang dadurch beendet, daß das Ammoniak im Verdampfer 3 vollständig verdampft ist oder daß beispielsweise in dem Kühlraum 10 eine bestimmte Kühltemperatur erreicht wurde, welche durch einen Thermostaten vorher eingestellt wurde, oder indem die Heizleistung des Sorberteils merkbar abnimmt und damit die Kühlwassertemperatur abnimmt, dann wird von der Sorptionsphase auf die Regenerationsphase umgestellt, wobei dies in Abhängigkeit von den vorgegebenen Meßwerten automatisch erfolgt. Das heißt beispielsweise, daß die Pumpe 37 abgestellt wird und die Heizeinrichtung 25 und/oder 32 eingestellt wird (siehe Fig. 3, 4).

In der Regenerationsphase wird das Ammoniak aus dem Sorberteil wieder ausgetrieben und gelangt über die Leitungen 15 und 14 bei einem relativ hohen Druck von 15 bis 20 bar und einer relativ hohen Temperatur von 180 bis 200° C über die Leitung 13 in flüssiger Form in den Behälter 7 des Verdampfers zurück, da es in der Kühlleitung 14 kondensiert. Im Reaktor 5 bewirkt die Heizleistung der Heizpatrone 25 ein Kochen der Arbeitsflüssigkeit 18 im Arbeitsraum 17, so daß Dampf nach oben steigt und auf der Oberfläche des Sorberteils 6 kondensiert sowie teilweise über die Anschlußleitung 36 in den Vorratsbehälter und in die Kühlleitung 21 gelangt, in der er kondensiert. Durch die Bildung von Dampf im oberen Teil des Arbeitsraumes wird eine sehr effektive Übertragung der Heizleistung der Heizpatrone 25 auf das Sorberteil 6 bewirkt, da der Dampf das Sorberteil 6 im oberen Bereich vollständig und innig berührt und an der kühleren Oberfläche des Sorberbereichs auskondensiert, um als Flüssigkeit nach unten zu strömen.

Sobald das gesamte Ammoniak aus dem Sorberteil 6 ausgetrieben ist, stellt die Vorrichtung automatisch auf Sorptionsbetrieb wieder um. Hierzu können wiederum Regelgrößen in Form von Temperatur, Mengenmessung, Zeitmessung und dergleichen verwendet werden, die erkennen lassen, daß der Austreibungsvorgang beendet ist.

Somit kann beispielsweise durch die thermostatische Regelung des Anschaltens der Pumpe, was dem Umstellen von der Regenerations- auf die Sorptionsphase entspricht, bzw. des Abschaltens der Pumpe, was dem Umstellen von der Sorptions- auf die Regenerationsphase entspricht, eine Regelung der Kühltemperatur erreicht werden.

### Bezugszeichenliste

- 1: Gehäuseeinheit
- 2: Kühleinheit
- 3: Verdampfer
- 4: Kondensator
- 5: Reaktor
- 6: Sorberteil
- 7: Behälter
- 8: Ammoniak
- 9: Kühlrohr
- 10: Kühlraum
- 11: Kühlblech
- 12: Verdampferrohr
- 13: Rohrleitung
- 14: Rohrleitung
- 15: senkrechtes Rohr
- 16: Isoliermantel
- 17: Arbeitsraum
- 18: Arbeitsflüssigkeit
- 19: zweites geschlossenes System
- 20: Steigrohr
- 21: Kühlrohr
- 22: Vorratsbehälter
- 23: Fallrohr
- 24: Absperrventil
- 25: Heizeinrichtung
- 26: Flüssigkeitsniveau
- 27: erstes geschlossenes System
- 28: Radiator
- 29: Flüssigkeitsniveau
- 30: Kammer
- 31: Gasrohr
- 32: Gasflamme
- 33: Obere Leitung
- 34: Untere Leitung
- 35: Verbindungsleitung
- 36: Anschlußleitung
- 37: Pumpe
- 38: Flüssigkeitsniveau

## Patentansprüche

1. Kühlvorrichtung, umfassend eine Gehäuseeinheit (1) und eine intermittierend arbeitende Kühleinheit, wobei die Kühleinheit (2) einen in der Gehäuseeinheit aufgenommenen Verdampfer (3), einen Kondensator (4) und einen Reaktor (5) mit einem mit einer Heizeinrichtung (25) beheizbaren Sorberteil (6) aufweist, das mit einem sorptionsfähigen Material gefüllt ist, welches bei Normaltemperatur eine Arbeitsflüssigkeit (8) sorbiert und diese bei Erwärmung wieder abgibt, und wobei der Verdampfer, der Kondensator und das Sorberteil (6) durch eine Leitung miteinander verbunden sind und ein erstes geschlossenes System (27) bilden, wobei der Reaktor (5) mit einem zweiten (19) mit einer Arbeitsflüssigkeit (18) gefüllten geschlossenen System versehen ist, welches einen Vorratsbehälter (22) und einen das Sorberteil (6) umgebenden Arbeitsraum (17) umfaßt und in der Sorptionsphase (Kühlphase) der Kühlvorrichtung als Kühlsystem für den Reaktor (5) und in der Regenerationsphase der Kühlvorrichtung als Heizsystem für den Reaktor steuerbar ist, **dadurch gekennzeichnet, daß** in dem zweiten geschlossenen System eine Pumpe vorgesehen ist und der Reaktor (5) im oberen Bereich der Kühlvorrichtung angeordnet ist und sich der Vorratsbehälter (22) unterhalb des Sorberteils des Reaktors befindet, um bei abgeschalteter Pumpe eine Rückströmung eines Teils der Arbeitsflüssigkeit aus dem Arbeitsraum (17) in den Vorratsbehälter (22) zu ermöglichen.

2. Kühlvorrichtung nach Anspruch 1, **dadurch gekennzeichnet,** daß in Abhängigkeit von einer vorgegebenen Meßgröße eine Umschaltung der Kühleinheit vom Sorptionsbetrieb zum Regenerationsbetrieb bzw. umgekehrt erfolgt.

3. Kühlvorrichtung nach Anspruch 2, **dadurch gekennzeichnet**, daß die Meßgröße einer vorgegebenen Temperatur der Arbeitsflüssigkeit entspricht.

4. Kühlvorrichtung nach Anspruch 2, **dadurch gekennzeichnet,** daß die Meßgröße einer vorgegebenen Wärmeleistung der Heizeinrichtung des Reaktors (5) entspricht.

5. Kühlvorrichtung nach Anspruch 2, **dadurch gekennzeichnet,** daß die Meßgröße einer vorgegebenen Menge Ammoniak im Verdampfer entspricht.

6. Kühlvorrichtung nach Anspruch 2, **dadurch gekennzeichnet,** daß die Meßgröße einer durch einen einstellbaren Thermostaten in der Kühlvorrichtung erfaßten vorgegebenen Temperatur entspricht.

7. Kühlvorrichtung nach Anspruch 1, **dadurch gekennzeichnet,** daß das An- bzw. Abschalten der Pumpe durch einen auf die Temperatur im Kühlraum der Kühlvorrichtung einstellbaren Thermostaten geregelt wird.

8. Kühlvorrichtung nach einem der vorhergehenden Ansprüche, **dadurch gekennzeichnet,** daß das erste (27) und zweite (19) geschlossene System mit Radiatoren (28) ausgestattet sind.

9. Kühlvorrichtung nach einem der vorhergehenden Ansprüche, **dadurch gekennzeichnet,** daß die geschlossenen Systeme (19, 27) vor der Befüllung mit den Arbeitsflüssigkeiten (8, 18) evakuiert sind.

10. Kühlvorrichtung nach einem der vorhergehenden Ansprüche, **dadurch gekennzeichnet,** daß die Arbeitsflüssigkeit (8) des ersten geschlossenen Systems (27) Ammoniak, das Sorptionsmaterial ein Salz, insbesondere Manganchlorid, und die Arbeitsflüssigkeit (18) des zweiten geschlossenen Systems (19) Wasser sind.

11. Kühlvorrichtung nach einem der vorhergehenden Ansprüche, **dadurch gekennzeichnet,** daß der Verdampfer (3) einen in einer Isolierung des oberen Teils der Gehäuseeinheit (1) aufgenommenen Behälter (7) mit einem in den zu kühlenden Raum ragenden und mit einem Kühlblech verbundenen Kühlrohr (9) sowie ein sich daran anschließendes, bis über das Niveau der Arbeitsflüssigkeit zurückgeführtes Verdampferrohr umfaßt.

12. Kühlvorrichtung nach einem der vorhergehenden Ansprüche, **dadurch gekennzeichnet,** daß die Verbindungsleitung zwischen dem Verdampfer und dem Sorptionsteil des Reaktors wenigstens eine im wesentlichen senkrecht verlaufende Rohrleitung (13) kleinen Querschnitts und eine zum Reaktor (5) verlaufende schlangenförmige Kühlleitung vergrößerten Querschnitts aufweist, welche mit einem gelochten Abschnitt in das Sorptionsmaterial eingreift.

13. Kühlvorrichtung nach einem der vorhergehenden Ansprüche, **dadurch gekennzeichnet,** daß der Reaktor zwei konzentrisch und im Abstand zueinander angeordnete Gehäuseteile aufweist, wobei das innere Gehäuseteil das mit dem Sorptionsmaterial gefüllte Sorberteil (6) und das äußere Gehäuseteil ein das Sorberteil vollständig umschließender Isoliermantel (16) sind, und daß der Arbeitsraum (17) zwischen den Gehäuseteilen mit der Arbeitsflüssigkeit des zweiten (19) geschlossenen Systems gefüllt ist.

14. Kühlvorrichtung nach einem der vorhergehenden Ansprüche, **dadurch gekennzeichnet,** daß das zweite (19) geschlossene System in einem oberen Bereich und einem unteren Bereich an den Arbeitsraum (17) des Reaktors (5) angeschlossen ist.

15. Kühlvorrichtung nach einem der vorhergehenden Ansprüche, **dadurch gekennzeichnet,** daß die Heizeinrichtung des Sorberteils im unteren Bereich des Arbeitsraumes (17) des Reaktors (5) angeordnet und von der Arbeitsflüssigkeit (18) umspült ist.

16. Kühlvorrichtung nach Anspruch 15, **dadurch gekennzeichnet,** daß die Heizeinrichtung in einer separaten Kammer (30) angeordnet ist, die mit einem oberen und einem unteren Abschnitt des Arbeitsraumes verbunden ist.

17. Kühlvorrichtung nach Anspruch 15 oder 16, **dadurch gekennzeichnet,** daß die Heizeinrichtung eine elektrische Heizpatrone (25) ist.

18. Kühlvorrichtung nach Anspruch 15 oder 16, **dadurch gekennzeichnet,** daß die Heizeinrichtung von einer elektrischen Heizpatrone (25) und von einem an dem mit der Arbeitsflüssigkeit (18) gefüllten Arbeitsraum (17), insbesondere im Bereich der Heizpatrone vorbeigeführten, gasbeheizbaren Rohr gebildet ist.

19. Kühlvorrichtung nach einem der vorhergehenden Ansprüche, **dadurch gekennzeichnet,** daß die Heizeinrichtung mit dem zweiten geschlossenen System außerhalb des Arbeitsraumes des Reaktors verbunden ist.

20. Kühlvorrichtung nach einem der vorhergehenden Ansprüche, **dadurch gekennzeichnet,** daß das zweite geschlossene System ein im oberen Bereich des Arbeitsraumes angeschlossene Anschlußleitung (36), ein schlangenförmiges Kühlrohr (21), einen Vorratsbehälter (22) und ein mit dem unteren Bereich des Arbeitsraumes verbundenes Fallrohr (23) aufweist.

## Claims

1. Cooling apparatus, comprising a housing unit (1) and an intermittently operating cooling unit, the cooling unit (2) having an evaporator (3) accommodated in the housing unit, a condenser (4) and a reactor (5) having an absorber portion (6) which is heatable by a heating device (25) and which is filled with an absorbent material which, at normal temperature, absorbs a working fluid (8) and, when heated, releases it again, and the evaporator, the condenser and the absorber portion (6) being connected to one another by a line and forming a first closed system (27), the reactor (5) being provided with a second (19) closed system which is filled with a working fluid (18) and which comprises a supply container (22) and a working chamber (17) surrounding the absorber portion (6) and which is controllable in the absorption phase (cooling phase) of the cooling apparatus as a cooling system for the reactor (5) and is controllable in the regeneration phase of the cooling apparatus as a heating system for the reactor, characterised in that a pump is provided in the second closed system and the reactor (5) is arranged in the upper region of the cooling apparatus and the supply container (22) is arranged below the absorber portion of the reactor in order to enable some of the working fluid to flow back from the working chamber (17) and into the supply container (22) when the pump is switched off.

2. Cooling apparatus according to claim 1, characterised in that the cooling unit is switched over from absorption operation to regeneration operation or vice versa in accordance with a predetermined measured variable.

3. Cooling apparatus according to claim 2, characterised in that the measured variable corresponds to a predetermined temperature of the working fluid.

4. Cooling apparatus according to claim 2, characterised in that the measured variable corresponds to a predetermined thermal output of the heating device of the reactor (5).

5. Cooling apparatus according to claim 2, characterised in that the measured variable corresponds to a predetermined amount of ammonia in the evaporator.

6. Cooling apparatus according to claim 2, characterised in that the measured variable corresponds to a predetermined temperature detected by an adjustable thermostat in the cooling apparatus.

7. Cooling apparatus according to claim 1, characterised in that the switching on and off of the pump is regulated by a thermostat which is adjustable to the temperature in the cooling chamber of the cooling apparatus.

8. Cooling apparatus according to any one of the preceding claims, characterised in that the first (27) and the second (19) closed systems are equipped with radiators (28).

9. Cooling apparatus according to any one of the preceding claims, characterised in that the closed systems (19, 27) are evacuated before they are filled with the working fluids (8, 18).

10. Cooling apparatus according to any one of the preceding claims, characterised in that the working fluid (8) of the first closed system (27) is ammonia, the absorbent material is a salt, especially manganese chloride, and the working fluid (18) of the second closed system (19) is water.

11. Cooling apparatus according to any one of the preceding claims, characterised in that the evaporator (3) comprises a container (7) which is accommodated in insulation of the upper portion of the housing unit (1) and which has a cooling pipe (9) projecting into the chamber to be cooled and connected to a metal cooling plate, and the evaporator (3) also comprises an evaporator pipe which adjoins the cooling pipe (9) and which is returned to above the level of the working fluid.

12. Cooling apparatus according to any one of the preceding claims, characterised in that the connecting line between the evaporator and the absorber portion of the reactor has at least one pipeline (13) of small cross-section which extends substantially vertically and a serpentine cooling line of enlarged cross-section which extends to the reactor (5) and engages by means of a perforated portion in the absorbent material.

13. Cooling apparatus according to any one of the preceding claims, characterised in that the reactor has two housing portions which are arranged concentrically with and at a distance from one another, the inner housing portion being the absorber portion (6) filled with the absorbent material and the outer housing portion being an insulating jacket (16) completely surrounding the absorber portion, and in that the working chamber (17) between the housing portions is filled with the working fluid of the second (19) closed system.

14. Cooling apparatus according to any one of the preceding claims, characterised in that the second (19) closed system is connected, in an upper region and a lower region, to the working chamber (17) of the reactor (5).

15. Cooling apparatus according to any one of the preceding claims, characterised in that the heating device of the absorber portion is arranged in the lower region of the working chamber (17) of the reactor (5) and the working fluid (18) flows round it.

16. Cooling apparatus according to claim 15, characterised in that the heating device is arranged in a separate chamber (30) which is connected to an upper and a lower portion of the working chamber.

17. Cooling apparatus according to claim 15 or 16, characterised in that the heating device is an electrical heating cartridge (25).

18. Cooling apparatus according to claim 15 or 16, characterised in that the heating device is formed by an electrical heating cartridge (25) and by a gas-heatable pipe which is directed past the working chamber (17) filled with the working fluid (18), especially in the region of the heating cartridge.

19. Cooling apparatus according to any one of the preceding claims, characterised in that the heating device is connected to the second closed system outside the working chamber of the reactor.

20. Cooling apparatus according to any one of the preceding claims, characterised in that the second closed system has a connecting line (36) connected in the upper region of the working chamber, a serpentine cooling pipe (21), a supply container (22) and a downpipe (23) connected to the lower region of the working chamber.

## Revendications

1. Dispositif de refroidissement, comprenant une unité formant boîtier (1) et une unité de refroidissement travaillant de façon intermittente, l'unité de refroidissement (2) présentant un évaporateur (3) logé dans l'unité formant boîtier, un condenseur (4) et un réacteur (5) avec une partie de sorption (6) pouvant être chauffée à l'aide d'un dispositif de chauffage (25), partie de sorption remplie d'un matériau pouvant effectuer une sorption, qui, en cas de température normale, recueille un liquide de travail (8) et le restitue en cas de chauffage, et l'évaporateur, le condenseur et la partie de sorption (6) étant reliés ensemble par une conduite et constituant un premier système fermé (27), le réacteur (5) étant doté d'un deuxième système (19) fermé avec un liquide de travail (18), qui comprend un réservoir de stockage (22) et une enceinte de travail entourant la partie de sorption (6) et, dans la phase de sorption (phase de refroidissement) du dispositif de refroidissement, peut être commandé comme système de refroidissement pour le réacteur (5) et, dans la phase de régénération du dispositif de refroidissement, comme système de chauffage pour le réacteur, caractérisé en ce que dans le deuxième système fermé est prévue une pompe et le réacteur (5) est disposé dans la zone supérieure du dispositif de refroidissement, et le récipient de stockage (22) se trouve au-dessous de la partie de sorption du réacteur, pour permettre un renvoi d'une partie du liquide de travail, issue de l'enceinte de travail (17), dans le récipient de stockage (22), lorsque la pompe est mise hors service.

2. Dispositif de refroidissement selon la revendication 1, caractérisé en ce qu'une commutation de l'unité de refroidissement, avec passage du fonctionnement en sorption au fonctionnement en régénération ou inversement, est effectuée en fonction d'une grandeur de mesure prédéterminée.

3. Dispositif de refroidissement selon la revendication 2, caractérisé en ce que la grandeur de mesure correspond à une température prédéterminée du liquide de travail.

4. Dispositif de refroidissement selon la revendication 2, caractérisé en ce que la grandeur de mesure correspond à une puissance de chauffage prédéterminée du dispositif de chauffage du réacteur (5).

5. Dispositif de refroidissement selon la revendication 2, caractérisé en ce que la grandeur de mesure correspond à une quantité prédéterminée d'ammoniaque présent dans l'évaporateur.

6. Dispositif de refroidissement selon la revendication 2, caractérisé en ce que la grandeur de mesure correspond à une température prédéterminée, appréhendée par un thermostat réglable monté dans le dispositif de refroidissement.

7. Dispositif de refroidissement selon la revendication 1, caractérisé en ce que la mise en service ou hors service de la pompe et régie par un thermostat réglable sur la température de la chambre de refroidissement du dispositif de refroidissement.

8. Dispositif de refroidissement selon l'une des revendications précédentes, caractérisé en ce que le premier système fermé (27) et le deuxième système fermé (19) sont équipés de radiateurs (28).

9. Dispositif de refroidissement selon l'une des revendications précédentes, caractérisé en ce que les systèmes fermés (19, 27) sont évacués avant remplissage avec les liquides de travail (8, 18).

10. Dispositif de refroidissement selon l'une des revendications précédentes, caractérisé en ce que le liquide de travail (8) du premier système fermé (27) est de l'ammoniaque, le matériau de sorption est un sel, en particulier du chlorure de manganèse, et le liquide de travail (18) du deuxième système fermé (19) est de l'eau.

11. Un dispositif de refroidissement selon l'une des revendications précédentes, caractérisé en ce que l'évaporateur (3) comprend un récipient (7) logé dans une isolation de la partie supérieure de l'unité formant boîtier (1) avec un tube de refroidissement (9), pénétrant dans l'espace à refroidir et relié à une tôle de refroidissement, ainsi qu'un tube d'évaporation s'y raccordant, ramené jusqu'au niveau du liquide de travail.

12. Dispositif de refroidissement selon l'une des revendications précédentes, caractérisé en ce que la conduite de liaison entre l'évaporateur et la partie de sorption du réacteur présente au moins une conduite (13), s'étendant essentiellement verticalement et de petite section, et une conduite de refroidissement en forme de serpentin, s'étendant vers le réacteur (5) et de plus grande section, qui s'engage dans le matériau de sorption, par un tronçon doté de perforations.

13. Dispositif de refroidissement selon l'une des revendications précédentes, caractérisé en ce que le réacteur présente deux parties de boîtier disposées concentriquement à distance l'une de l'autre, la partie de boîtier intérieure constituant la partie de sorption (6) remplie du matériau de sorption et la partie de boîtier extérieure constituant une enveloppe d'isolation (16) entourant complètement la partie de sorption, et en ce que l'enceinte de travail (17) constituée entre les parties de boîtier est remplie du liquide de travail du deuxième système fermé (19).

14. Dispositif de refroidissement selon l'une des revendications précédentes, caractérisé en ce que le deuxième système fermé (19) est raccordé, dans une zone supérieure et dans une zone inférieure, à l'enceinte de travail (17) du réacteur (5).

15. Dispositif de refroidissement selon l'une des revendications précédentes, caractérisé en ce que le dispositif de chauffage de la partie de sorption est disposé dans la zone inférieure de l'enceinte de travail (17) du réacteur (5) et est balayé par un écoulement formé du liquide de travail (18).

16. Dispositif de refroidissement selon la revendications 15, caractérisé en ce que le dispositif de chauffage est disposé dans une chambre (30) séparée qui est reliée à un tronçon supérieur et un tronçon inférieur de l'enceinte de travail.

17. Dispositif de refroidissement selon la revendication 15 ou 16, caractérisé en ce que le dispositif de chauffage est une cartouche chauffante (25) électrique.

18. Dispositif de refroidissement selon la revendication 15 ou 16, caractérisé en ce que le dispositif de chauffage est constitué par une cartouche chauffante (25) électrique et par un tube susceptible d'être chauffé par des gaz, passant sur l'enceinte de travail (17) remplie par le liquide de travail (18), en particulier dans la zone de la cartouche chauffante.

19. Dispositif de refroidissement selon l'une des revendications précédentes, caractérisé en ce que le dispositif de chauffage est relié au deuxième système fermé à l'extérieur de l'enceinte de travail du réacteur.

20. Dispositif de refroidissement selon l'une des revendications précédentes, caractérisé en ce que le deuxième système fermé présente une conduite de raccordement (36) raccordée dans la zone supérieure de l'enceinte de travail, un tube de refroidissement en forme de serpentin (21), un récipient de stockage (22) et un tube de descente (23) relié à la zone inférieure de l'enceinte de travail.
